# EUROPEAN PATENT SPECIFICATION

(11) **EP 3 369 916 B1**
(45) Date of publication and mention of the grant of the patent: **09.12.2020**
(21) Application number: 16859801.9
(22) Date of filing: 25.10.2016
(51) Int. Cl.: F02D 29/02, F02D 17/00, B66C 23/40, B66C 23/42, B66C 23/78, F02N 11/08, F02D 17/04

(54) **WORK VEHICLE**
NUTZFAHRZEUG
VÉHICULE DE TRAVAIL

(30) Priority: 30.10.2015 JP 2015214157
(43) Date of publication of application: 05.09.2018
(73) Proprietor: Tadano Ltd., Takamatsu-shi, Kagawa 761-0185 (JP)
(72) Inventor: IKIYAMA, Takero, Takamatsu-shi Kagawa 761-0185 (JP)
(74) Representative: MFG Patentanwälte Meyer-Wildhagen Meggle-Freund Gerhard PartG mbB
(86) International application number: PCT/JP2016/081611
(87) International publication number: WO 2017/073571

(56) References cited:
- EP-A1- 2 774 888
- GB-A- 2 425 368
- JP-A- S4 944 452
- JP-A- 2002 332 194
- JP-A- 2002 332 194
- JP-A- 2010 127 098
- JP-A- 2010 127 098
- JP-A- 2010 265 864
- JP-A- 2012 067 666
- JP-A- 2013 067 516

## Description

### Technical Field

The present invention relates to a work vehicle.

### Background Art

A work machine such as a mobile crane generally includes a work apparatus that performs predetermined work, and an engine that is a motive power source for driving the work apparatus. The work apparatus is composed of a boom, a single top, a jib and the like, and these operate independently or in cooperation to perform crane work.

In crane work, for example, in accordance with a load or a movement range of a cargo used in the crane work, an outrigger is overhung, a swivel base is swiveled at a predetermined angle, the boom is raised and fallen at a predetermined angle, and is extended and contracted up to a predetermined length. In order to more safely perform such crane work, and in order to enable crane work as intended by a worker, suitable maintenance is appropriately performed.

The maintenance performed at this time is generally work for checking whether action intended in each work apparatus is operated, or work for, for example, performing replenishing a consumable member used in the crane work. Such maintenance is very important from a point of view of safety, and a point of view of work efficiency as described above.

PTL 1 discloses an apparatus in which work timing of this important maintenance can be easily determined in accordance with a work state of crane work.

Such maintenance work is performed in detail for each work apparatus in crane work, and needs to be performed carefully in order to more safely perform crane work. Moreover, the maintenance work is performed in order to check whether action intended in each work apparatus is performed, and may therefore be operated in a similar way to the crane work.

The work machine such as a mobile crane is provided with an idling stop function of stopping an engine that is in an idling state on condition that predetermined operation or the like is not performed continuously for a fixed time period, or the like. PTL 2 discloses a working vehicle according to the preamble of claim 1 in which, in response to the operation of an operating lever by an operator after idling stop of the engine, control is effected to automatically restart the engine in such a manner that the working vehicle will not unexpectedly move. After the idling stop of the engine, when a lock lever is brought to a lock position, a hydraulic circuit is controlled to cause the working vehicle to enter in its inoperable state in which the working vehicle will not move. Thereafter, when a particular operation is applied to the operating lever, the engine is restarted. After restarting of the engine, only when all operating levers are in the neutral position, the lock lever is released from its locked state. Whereupon the hydraulic circuit is gradually restored to its normal operable state, the working vehicle can move.

### Citation List

### Patent Literature

PTL 1: Japanese Patent Application Laid-Open No. 2013-076444
PTL 2: UK Patent Publication No. GB 2425386 B

### Summary of Invention

### Technical Problem

When the engine is stopped by this idling stop function, the state of the work apparatus may be changed after the stop of the engine. At least, since the engine is stopped, the rotating speed of the engine is naturally changed.

During the maintenance work described above, when the engine is stopped by the idling stop function, items required to be checked in the maintenance work may be changed after the stop of the engine. Additionally, the maintenance work itself sometimes cannot be performed depending on the case.

An object of the present invention is to provide a work vehicle that can efficiently perform maintenance for crane work.

### Solution to Problem

In order to achieve the above object, the present invention includes: a work apparatus that performs predetermined work; an engine stop section that stops an engine on the basis of a predetermined engine stop condition; a detection section that detects apparatus information related to the work apparatus; a determination section that determines whether or not a management work state is kept, by using the apparatus information detected by the detection section, the management work state being a state in which management work is performed to ensure that an action is accomplished based on the predetermined work when the work apparatus performs the predetermined work; and an engine stop inhibition section that inhibits the engine from being stopped by the engine stop section even when the engine stop condition is established, in a case where the determination section determines that the management work state is kept.

### Brief Description of Drawings

FIG. 1 is a diagram illustrating a mobile crane according to an embodiment of the present invention;
FIG. 2 is a block diagram illustrating an example of apparatuses provided in the mobile crane according to the embodiment of the present invention;
FIG. 3 is a diagram illustrating a screen displayed on a display of the mobile crane according to the embodiment of the present invention;
FIG. 4 is a flowchart illustrating an idling stop control process performed by a controller constituting the mobile crane according to the embodiment of the present invention;
FIG. 5 is a flowchart illustrating a maintenance process performed by the controller constituting the mobile crane according to the embodiment of the present invention;

### Description of Embodiments

Hereinafter, an embodiment of mobile crane 1 according to the present invention will be described in detail with reference to the attached drawings.

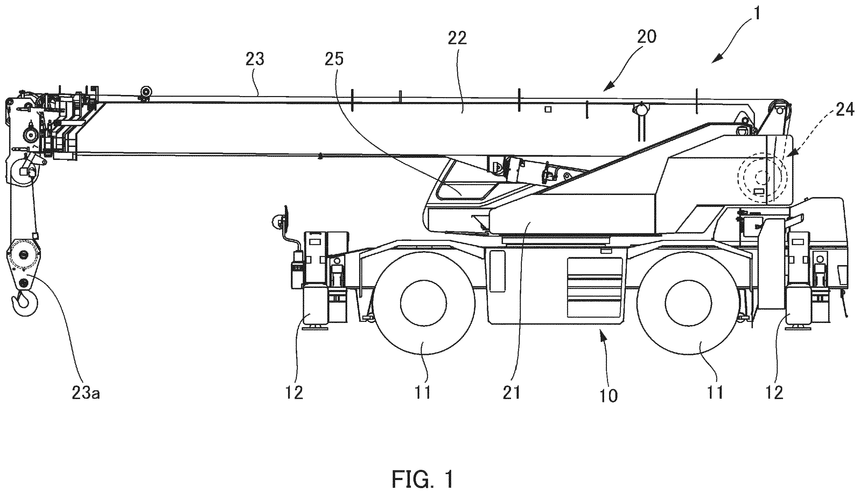

FIG. 1 is a diagram illustrating mobile crane 1 according to an embodiment of the present invention. Mobile crane 1 is illustrated as an example of a work vehicle.

Mobile crane 1 (hereinafter, simply referred to as a "crane") illustrated in FIG. 1 includes vehicle 10 as a traveling body, and crane apparatus 20 that is a work apparatus which performs "crane work" for lifting a cargo (object to be worked) and turning horizontally to transport the cargo. This crane work is an example of "predetermined work" performed by crane apparatus 20, and crane apparatus 20 is an example of a work machine or a work apparatus that performs the "predetermined work".

Vehicle 10 is a machine body that supports crane apparatus 20. Vehicle 10 uses, as a motive power source, an engine being an internal combustion engine, and rotates wheels 11 to travel. In this vehicle 10, outriggers 12 that stably support vehicle 10 or a crane itself to prevent falling at the time of crane work are provided at front two portions and rear two portions, a total of four portions.

Outrigger oil hydraulic circuit 61b drives overhanging cylinders 60e on the basis of a control signal from controller 50 described below, so that each of outriggers 12 can overhang to the outside in the width direction of vehicle 10. Outriggers 12 can extend downward when outrigger oil hydraulic circuit 61b drives hydraulic jack cylinders 60f on the basis of a control signal from controller 50. Outriggers 12 extend jack cylinders 60f downward to be grounded at four portions, so that vehicle 10 is stably supported with respect to the ground.

Crane apparatus 20 includes swivel base 21, boom 22, wire rope 23, winch 24, and cab 25. Swivel base 21 is provided at a substantially central part in the longitudinal direction of vehicle 10 so as to be able to swivel on a horizontal plane. Boom 22 is provided so as to be able to rise and fall with respect to swivel base 21 and so as to be able to extend and contract. Wire rope 23 is suspended from a distal end of boom 22. Winch 24 performs reeling and unreeling of wire rope 23. Cab 25 is provided on a front side of swivel base 21. Cab 25 is an operation stand for performing operation related to traveling of vehicle 10 and work by crane apparatus 20.

Swivel base 21 swivels with respect to vehicle 10 by driving of swivel motors 60a. Boom 22 rises and falls from swivel base 21 with derricking cylinders 60b.

On the basis of a control signal from controller 50 described below, boom oil hydraulic circuit 61a drives extension and contraction cylinders 60c, so that boom 22 can extend and contract the length. At this time, boom oil hydraulic circuit 61a drives derricking cylinders 60b together with extension and contraction cylinders 60c, so that boom 22 can be raised and fallen with the extension and contraction of boom 22.

Winch 24 performs reeling and unreeling of wire rope 23 suspended from the distal end of the boom by rotation of winch motors 60d. Thus, a cargo can be lifted and suspended by a bucket or snatch block 23a suspended from the distal end of boom 22.

Therefore, each work, or cooperated work is referred to as "crane work".

Swivel motors 60a, derricking cylinders 60b, extension and contraction cylinders 60c, and winch motors 60d each are an example of an actuator 60 that operates with hydraulic oil (oil) in order to implement each function. In addition to the above, various actuators 60 (not illustrated) exist.

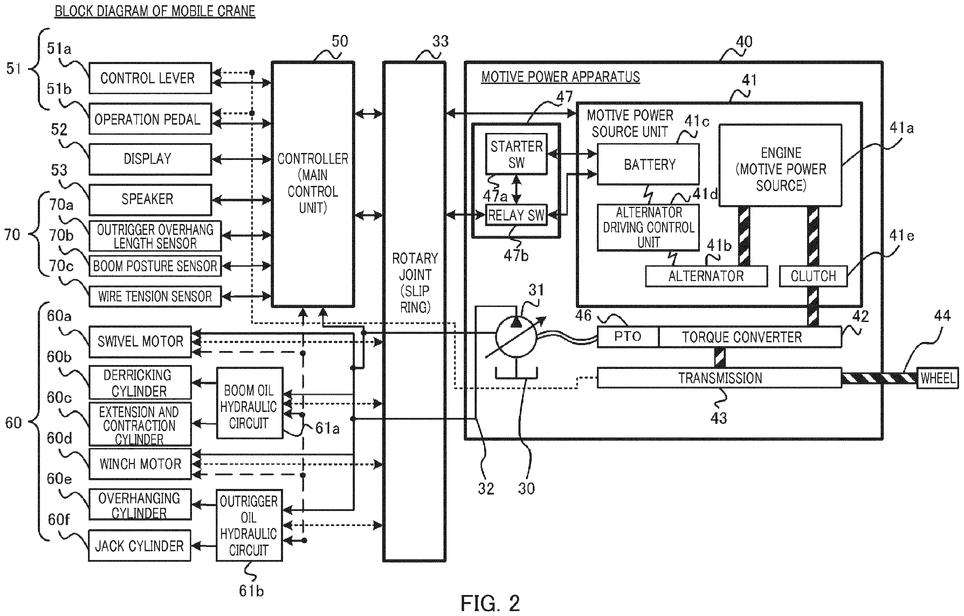

FIG. 2 is a block diagram illustrating an example of apparatuses provided in the mobile crane according to the embodiment of the present invention.

Mobile crane 1 has oil pressure supply apparatus 30, rotary joint 33, motive power apparatus 40, and controller 50. Oil pressure supply apparatus 30 is used during traveling of vehicle 10 or during work by crane apparatus 20. Rotary joint 33 connects vehicle 10, and crane apparatus 20 which rotates with respect to the vehicle. Motive power apparatus 40 operates by using oil supplied from oil pressure supply apparatus 30. Controller 50 controls motive power apparatus 40 on the basis of an instruction from a worker.

Oil pressure supply apparatus 30 supplies hydraulic oil (oil) to respective actuators 60 in order to implement respective functions in actuators 60 such as swivel motors 60a, derricking cylinders 60b, extension and contraction cylinders 60c, and winch motors 60d.

Oil pressure supply apparatus 30 includes oil hydraulic pump 31 that generates oil pressure in order to supply (discharge) the hydraulic oil to each actuator 60, and oil hydraulic circuit 32 for supplying, to each actuator 60, the hydraulic oil discharged from oil hydraulic pump 31.

Oil hydraulic pump 31 is composed of, for example, a swash axial plunger oil hydraulic pump, and a variable displacement oil hydraulic pump capable of changing the angle of a swash plate. Oil hydraulic pump 31 drives with motive power taken out from motive power apparatus 40. Motive power apparatus 40 generates motive power for allowing vehicle 10 to travel, and transmits the motive power to wheels 11.

Actuators 60 provided in crane apparatus 20 are connected to oil hydraulic circuit 32 through rotary joint 33. A plurality of control valves (not illustrated) are provided in oil hydraulic circuit 32, and the flow rate and the flow direction of hydraulic oil that flows in each actuator 60 are controlled by each control valve. For each control valve, the flow rate of hydraulic oil is adjusted by a worker (driver) operating operation input part 51 provided in cab 25, in accordance with an amount of operation. Operation input part 51h is composed of control lever 51a, operation pedal 51b, and the like. Each control valve has a switching section such as a solenoid, and adjusts the flow rate of hydraulic oil in accordance with a signal from controller 50.

Rotary joint 33 is a rotation apparatus that connects vehicle 10 as a traveling body and crane apparatus 20 that rotates. Rotary joint 33 transmits and receives various electrical signals between vehicle 10 and crane apparatus 20 that rotates with respect to vehicle 10 through an interface such as a slip ring. In other words, it can be said that vehicle 10 is a stationary body, and crane apparatus 20 is a rotating body, as viewed from crane apparatus 20.

Motive power apparatus 40 includes at least motive power source unit 41 that generates motive power, torque converter 42, transmission 43, propeller shaft 44, and starter 47. Torque converter 42 converts torque to transmit, to the sides of wheels 11, motive power output from motive power source unit 41. Transmission 43 changes the rotating speed and the torque of the motive power output from torque converter 42. Propeller shaft 44 transmits, to wheels 11, the motive power output from transmission 43. Starter 47 that instructs motive power source unit 41 on running (start) of the motive power source.

Motive power source unit 41 includes engine 41a that is a motive power source, alternator 41b, battery 41c, alternator driving control unit 41d, and clutch 41e. Alternator 41b functions as an electric motor, and functions as a generator with motive power of engine 41a. Battery 41c stores electric power generated by alternator 41b, and is capable of supplying the electric power in a case where alternator 41b functions as the electric motor. Alternator driving control unit 41d controls output of battery 41c, and controls operation of alternator 41b. Clutch 41e is capable of switching transmission and cutting of output of engine 41a to torque converter 42.

Alternator 41b is also referred to as a "motive power generation part." Alternator 41b generates electric power with motive power output from engine 41a to store the electric power in battery 41c through alternator driving control unit 41d (stores electric power).

Battery 41c is a power source (electric power supply source) used in controller 50 and various electric circuits. Battery 41c supplies the electric power to controller 50 and the electric circuit according to an instruction from starter 47.

This battery 41c is regularly charged (stores electric power) by alternator 41b in a case where engine 41a is run, and traveling or crane work is performed. In other words, even when electric power of battery 41c is used for the traveling or the crane work, battery 41c can be made to timely hold optimum charge capacity by the charging from alternator 41b. The optimum charge capacity of battery 41c at this time is, for example, a "full charge state".

Battery 41c is composed of a lithium ion battery or the like. Charge capacity (storage battery capacity) charged in battery 41c decreases in accordance with the use state in addition to natural discharge due to use environment and the like. For example, in a case of use at a high temperature which exceeds a prescribed temperature, or in a case of continuation of charging by further application of a voltage in a full charge state (trickle charging), the electric power of battery 41c decreases at a relatively high speed.

Alternator driving control unit 41d is also referred to as an "electric power control unit." Alternator driving control unit 41d has an inverter, a boost converter, a motor control unit, a generator control unit, and the like, controls output of battery 41c to supply electric power to alternator 41b, and switches the function of alternator 41b to the generator or the electric motor in accordance with a signal from controller 50. Additionally, in alternator driving control unit 41d, power source cable (illustration is omitted) for connection to an external power source is connectable, and the power source can be switched to battery 41c or the external power source in a case where alternator 41b functions as the electric motor. For the external power source, for example, a power source such as 3-phase AC 200 V and 3-phase AC 400 V is used.

A PTO (power take-off) mechanism 46 capable of taking out motive power transmitted to transmission 43 is provided on the output side of torque converter 42. Torque converter 42 is connected to oil hydraulic pump 31 through PTO mechanism 46. PTO mechanism 46 is capable of switching connection and disconnection between oil hydraulic pump 31, and an output shaft of engine 41a and input and output shafts of torque converter 42.

Starter 47 is composed of starter switch 47a (illustrated as a "starter SW"), and relay switch 47b (illustrated as a "relay SW"). Starter 47 causes a function and an apparatus necessary for engine 41a and crane work to run.

Starter switch 47a is a switch that connects battery 41c and controller 50 during traveling of vehicle 10, during crane work, or the like. Relay switch 47b is switch that connects or disconnects battery 41c and controller 50 by an excitation coil or the like which magnetizes a magnetic substance to relay (transmit) electric power (power source).

Controller 50 is composed of a CPU, a ROM, a RAM, a timer, and the like. When the CPU receives an input signal from a connected apparatus, a program stored in the ROM is read out on the basis of the input signal, a state detected in accordance with the input signal is stored in the RAM, and an output signal is transmitted to the connected apparatus. Time information timed by the timer can be used for a process performed in the CPU at this time.

To this controller 50, each actuator 60, control valve (not illustrated) corresponding to each actuator 60, oil hydraulic pump 31, motive power source unit 41, operation input part 51, touch panel type display 52 (combines an input apparatus and a display apparatus), and speaker 53 are connected. Operation input part 51 is composed of as control lever 51a and operation pedal 51b for performing operation of vehicle 10 and crane apparatus 20, for example. Display 52 performs various setting such as traveling of vehicle 10 and driving of crane apparatus 20. Speaker 53 gives sound notification that crane apparatus 20 is under driving to a worker therearound. In addition, outrigger overhang length sensor 70a that detects an overhang length (actual overhang length) of each outrigger 12, boom posture sensor 70b that detects the posture of boom 22, and wire tension sensor 70c that detects the tension of the wire caused by the winch are connected to controller 50.

This outrigger overhang length sensor 70a is a sensor that detects the overhang length thereof between a minimum overhang length and a maximum overhang length. For example, outrigger overhang length sensor 70a can detect an outrigger inner position by means of a plurality of switches provided in outrigger 12 to detect the overhang length.

Boom posture sensor 70b is composed of a strain detector, a derricking angle detector, a boom length detector, a swivel angle detector, and the like. Boom posture sensor 70b can grasp the work posture of boom 22 in accordance with information of these detectors. The strain detector at this time is mounted on the derricking cylinder, and can detect a load amount (load moment amount) on the entirety of boom 22. The derricking angle detector is mounted on boom 22 itself, and can detect the derricking angle of the boom being in a rising and falling state. In addition to the above, the boom length detector is mounted on the boom itself, and can detect the extension and contraction amount of the boom. The swivel angle detector can detect the swivel angle of the swivel base.

Wire tension sensor 70c is mounted on the distal end of boom 22, and detects wire tension.

In addition to the above, a signal related to a driving state of each actuator 60 is input to controller 50. When this signal is input, controller 50 outputs a signal to each control valve or display 52 on the basis of the signal related to the driving state of each actuator 60. Additionally, a signal related to electric power supplied to a connection part of alternator driving control unit 41d connected to power source cable 41f is input to controller 50. Controller 50 detects the existence/absence of connection of the external power source on the basis of a voltage of the external power source supplied to the connection part.

In thus configured mobile crane 1 as a work machine, in a case where work by crane apparatus 20 is performed, oil hydraulic pump 31 can be driven by any of motive power of engine 41a, electric power of battery 41c, and electric power of the external power source.

Furthermore, controller 50 determines whether or not an engine stop condition (also referred to as an "idling stop permission condition" in addition to the above) for permitting stop of engine 41a. For example, the engine stop condition includes a case where an input signal is not continuously received from at least one of control lever 51a, operation pedal 51b, display 52, and speaker 53 for a fixed time, and consequently driving operation by actuator 60 is not performed for a fixed time, or a case where predetermined operation by a worker (driver) is not performed for a fixed time, is established. The stop of the engine at this time is generally referred to as "idling stop".

The engine stop by the idling stop is different from engine stop caused after starter switch 47a is brought into an invalid (OFF) state by stop operation of engine start/stop switch (engine key), and indicates that the engine is stopped while starter switch 47a is in a valid (ON) state.

In other words, the engine stop by the idling stop indicates a state in which a current is relayed from battery 41c to each electric apparatus by relay switch 47b, and a state in which operation and control of each electric apparatus is possible.

Furthermore, the engine is in the stop state by the idling stop, and therefore alternator driving control unit 41d is in a state in which electric power cannot stored in battery 41c by electric power generated from alternator 41b. On the other hand, as described above, a current is relayed from battery 41c to each electric apparatus, and therefore the storage battery capacity of battery 41c decreases. As the idling stop state is continued, the storage battery capacity of battery 41c is decreased.

Consequently, battery 41c cannot obtain electric power necessary for rotating the engine (starting the engine) in the idling stop state, and cannot start the engine. This means that mobile crane 1 can neither travel nor perform crane work.

Therefore, controller 50 measures the remaining capacity of the storage battery capacity of battery 41c by using a measurement apparatus (not illustrated) such as a tester and a sensor provided in motive power source unit 41. Then, when it is determined that storage battery capacity of battery 41c falls under predetermined capacity as measured by the measurement apparatus, controller 50 restarts engine 41a to cause alternator driving control unit 41d to start charging of battery 41c.

When the idling stop permission condition is established, controller 50 performs a process of determining whether or not a mode is a maintenance mode for performing management work (hereinafter, referred to as "maintenance work") of information related to crane work. The maintenance mode is a state in which maintenance, inspection, and adjustment (hereinafter, generally referred to as "maintenance work") in the crane work are enabled. The maintenance mode is a mode in a state (maintenance work state) capable of being shifted by performing starting operation of maintenance work by an operator (including a service personnel) at the time of failure or on a regular basis, before the crane work is started (before setting related to crane work is performed).

In the maintenance mode, signals from the respective sensors (for example, the outrigger overhang length sensor, the boom posture sensor, the wire tension sensor, and the like) are input to the display, and information based on these signals are displayed (output). More specifically, the maintenance mode includes two modes (maintenance work states): a "service mode" in which an operator or a service personnel checks whether the crane is in a normal state in which the crane can fulfill its duty in the crane work on the bases of these input information, and causes the crane to perform actions similar to the actual crane work; and an "adjustment mode" in which, unlike the "service mode", it is possible to check whether the information based on the signals input from the respective sensors coincides with actually measured actual data, and is correct, and adjustment can be made.

The former "service mode" further includes a state in which information related to a generated obstacle (error) is displayed on the display. In other words, "service mode" is a mode in which information related to crane work is displayed, and a measure can be performed based on the information.

In "service mode", for example, when crane work is being performed, it can be checked whether information related to the crane work from the respective work apparatuses (such as boom 22, outrigger 12, a jib (illustration is omitted), and a single top (illustration is omitted)) can be displayed. In addition to the above, in the "service mode", as described above, actual crane work is performed, so that it can be checked whether various safety apparatuses for ensuring safety run. More specifically, in the maintenance mode, when an operator or a service personnel inputs a work mode of each work apparatus necessary for crane work to a setting screen, a working moment and a rated moment are calculated based on a signal detected in the crane work in the work mode by each sensor, whether or not a moment load ratio is displayed can be checked. In addition to the above, in the maintenance mode, it can be checked whether predetermined notification (such as alarm buzzer, danger marking (error code display, outside display light lighting, and the like)) can be performed when the moment load ratio exceeds a fixed value (for example, 100%).

In the "adjustment mode", controller 50 can check whether information (detection data) based on a signal received from each sensor coincides with actually measured actual data. In the "adjustment mode", an adjustment process for correcting detection data to actual data can be performed in a case where there is discrepancy between the detection data and the actual data. In other words, actual data after the correction is replaced with the detection data detected by the sensor.

As this adjustment process, for example, in the "adjustment mode", in a case where the detection data based on a signal received by controller 50 from boom posture sensor 70b is different from actual data actually measured by a worker (operator), an error is generated in the sensor, and therefore controller 50 can adjust (set) this error to correct data so as to correct the error.

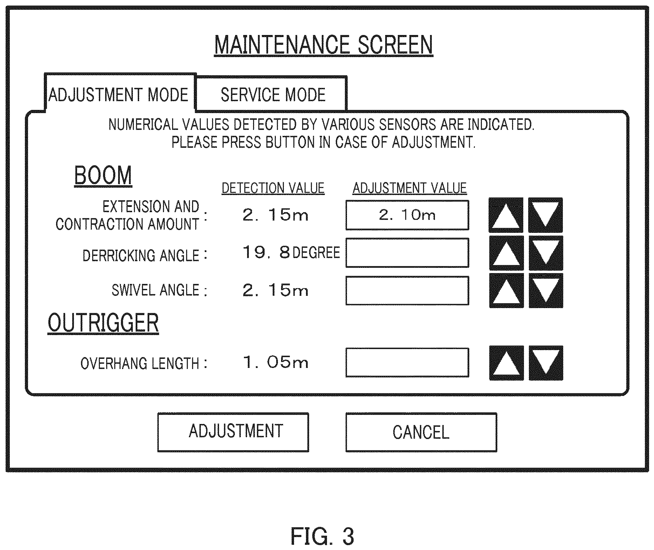

FIG. 3 is an example of a maintenance screen displayed when maintenance work is performed. FIG. 3 illustrates a maintenance screen showing maintenance information in the "adjustment mode". In the example of the screen illustrated in FIG. 3, switching between the "adjustment mode" and the "service mode" can be performed by means of tab display.

In the "adjustment mode" illustrated in FIG. 3, as an example, the "extension and contraction amount", the "derricking angle", and the "swivel angle" of boom 22 detected by the boom length detector, the derricking angle detector, the swivel angle detector, and the like provided in the boom are illustrated as detection values for the respective items. In addition, in FIG. 3, the "overhang length" of the outrigger detected by outrigger overhang length sensor 70a provided in the outrigger is illustrated as a detection value for the item of the "overhang length." Actual data can be input as an adjustment value for the detection in a case where each of these detection values needs to be corrected.

In FIG. 3, when an adjustment button is depressed in a state in which the respective adjustment values are input, the input adjustment values are replaced as detection values. Of course, when correction is not needed, any input does not need to be performed. In the example illustrated in FIG. 3, while "2.15 m" is detected as the "extension and contraction amount" of boom 22, the actual length as the actual data is "2.10 m", and therefore an arrow key button is depressed, and a state in which the adjustment value is set to "2.10 m" is illustrated.

The adjustable items in "adjustment mode" are important matters for determining rated load, and includes matters used to determine work posture in crane work. The rated load is determined in accordance with work conditions such as the overhang width of outrigger 12, the swivel angle of the swivel base, the derricking angle and the extension and contraction amount of boom 22. It is recommended that crane work is performed within this rated load. On the contrary, the rated load indicates that a risk such as falling is increased when the crane work is performed in a state in which load exceeds this rated load, in a so-called overload state.

In a case where controller 50 determines that the maintenance mode as described above is set at the time of establishment of the idling stop permission condition, more specifically, in a case where mode information (or flag information) of the "maintenance mode" is managed in a RAM or the like, controller 50 inhibits (prohibits) the engine from being stopped based on the establishment of the idling stop permission condition. In other words, controller 50 controls such that the information displayed on the screen illustrated in FIG. 3 is not changed after the stop of the engine, by causing the driving of the engine to continue.

On the other hand, in a case where it is determined that the "maintenance mode" is not kept when the idling stop permission condition is established (when the mode information is not managed in the RAM), controller 50 transmits an engine stop signal to motive power source unit 41.

As a inhibition method for the idling stop, for example, there is a method for invalidating the establishment of the idling stop permission condition (performing a change for invalidating the establishment of the idling stop permission condition), in addition to a method for making controller 50 cut (invalidate) an engine stop signal transmitted to motive power source unit 41.

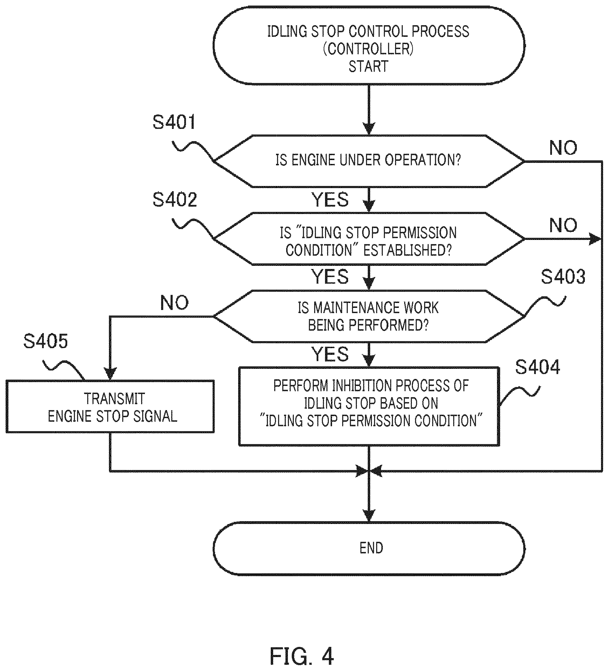

FIG. 4 is a flowchart illustrating an idling stop control process performed by controller 50 constituting mobile crane 1 according to the embodiment of the present invention.

In FIG. 4, controller 50 determines whether or not the engine is under operation (including under idling) by interrupt control at regular intervals, or the like (S401). The case where the engine is not under operation is, for example, a case where the engine is already in an idling stop state. In a case where it is not determined that the engine is under operation (NO in S401), in this determination process of S401, controller 50 does not perform any subsequent process to terminate the idling stop control process.

In a case where it is determined that the engine is under operation (YES in S401), in this determination process of S401, controller 50 then determines whether or not the idling stop permission condition is established (S402). In a case where it is not determined that the idling stop permission condition is established (NO in S402), controller 50 does not perform any subsequent process to terminate the idling stop control process.

On the other hand, in a case where it is determined that the idling stop permission condition is established (YES in S402), in this determination process of S402, controller 50 then determines whether or not the maintenance mode in which a worker performs maintenance work is kept, by using the screen illustrated in FIG. 3 (S403). In this determination process, (a CPU of) controller 50 manages the mode information (or flag information) of the "maintenance mode" in the RAM or the like when the screen illustrated in FIG. 3 is displayed, and it is determined that the state is under setting work when this mode information is managed in the RAM.

In this determination process of S403, in a case where it is determined that the maintenance mode is kept (YES in S403), controller 50 inhibits (prohibits) the idling stop based on the idling stop permission condition (S404). More specifically, controller 50 cancels the establishment of the idling stop permission condition, and causes the idling stop permission condition not to be established.

This "inhibition of the idling stop based on the establishment of the idling stop permission condition" means that change of the state by the stop of the engine can be prevented in case of the "service mode" or the "adjustment mode" of the maintenance mode. The contents of information displayed on the display are not changed by performing the idling stop.

In the determination process of determining whether or not the maintenance mode is kept (S403), in a case where it is not determined that the maintenance mode is kept (NO in S403), controller 50 transmits a signal for stopping engine 41a to motive power source unit 41 (S405).

The case where it is not determined that the maintenance mode is kept means, for example, a state in which the mode information (or flag information) of the maintenance mode is not managed in the RAM or the like.

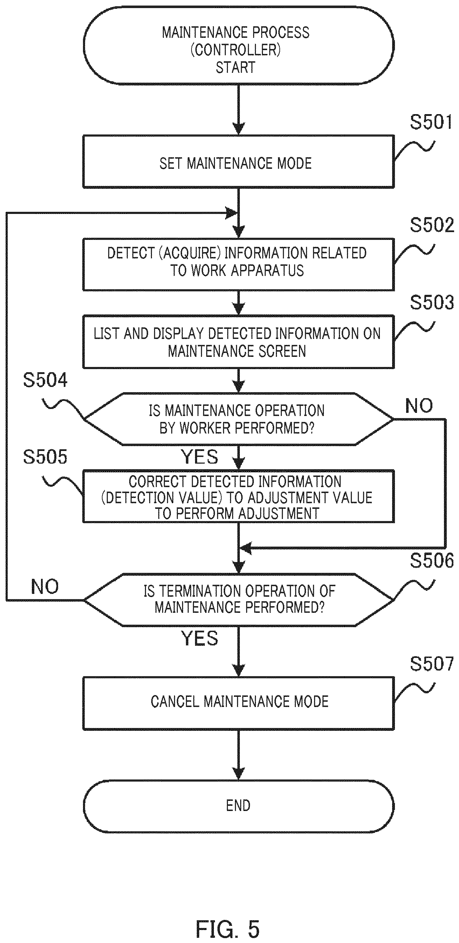

FIG. 5 is a flowchart illustrating a maintenance process performed by controller 50 constituting mobile crane 1 according to the embodiment of the present invention.

The processing of FIG. 5 is started when shifting operation to the maintenance mode is performed by operation by a worker (operator). When receiving the shifting operation to the maintenance mode, controller 50 stores information related to the maintenance mode in the RAM or the like to perform setting of the state of the maintenance mode (S501).

When the maintenance mode is set, controller 50 then detects (acquires) the maintenance information displayed on the screen illustrated in FIG. 3 (S502). The detection process of S502 is a process of acquiring, by controller 50, information detected by each sensor.

Then, controller 50 lists the screen including each maintenance information detected by the detection process (S502) and illustrated in FIG. 3, on the display (S503).

Controller 50 determines whether or not maintenance operation is performed by the worker (operator) in a state in which this screen is displayed on the display (S504). The maintenance operation is referred to as operation for displayed maintenance information, the operation for inputting an adjustment value for performing adjustment with respect to a detection value, and setting operation, in a case of the screen of "adjustment mode" illustrated in FIG. 3, for example.

In this determination process of S504, in a case where it is determined that the maintenance operation is performed (YES in S504), controller 50 performs an adjustment process of correcting the detected and listed information (detection value) to an adjustment value input and set in the maintenance operation (S505). In a case where the maintenance operation is not performed (NO in S504), controller 50 does not perform the adjustment process.

Then, controller 50 determines whether or not operation for terminating the maintenance work is performed by the worker (operator) (S506). When the operation for terminating the maintenance work is performed (YES in S506), controller 50 performs a process of cancelling the maintenance mode (S507). This cancelling process of S507 is a process of cancelling the maintenance mode set in the process for setting the maintenance mode (S501). Controller 50 deletes the information related to the maintenance mode stored in the RAM or the like.

In the maintenance process described above, in a case where the maintenance mode is set, when the idling stop permission condition is established, controller 50 inhibits the engine stop based on the establishment of the idling stop permission condition. Thus, it is possible to prevent the change of the maintenance information resulting from the engine stop, and it is possible to efficiently perform the maintenance work.

The above embodiment is an embodiment of the present invention, and the present invention is not limited to these embodiment, and can be implemented by appropriately changing within the scope of the present invention, as defined by the attached claims.

### Reference Signs List

1 Mobile crane
10 Vehicle
20 Crane apparatus
25 Cab
30 Oil pressure supply apparatus
31 Oil hydraulic pump
40 Motive power apparatus
41 Motive power source unit
41b Alternator
41d Alternator driving control unit
41f Power source cable
50 Controller
51 Operation input part
52 Display
53 Speaker
60 Actuator

## Claims

1. A work vehicle (1) comprising:
a work apparatus (20) that performs predetermined work, using an engine (41a) as a motive power source;
an engine stop section (50) that stops the engine (41a) on the basis of a predetermined engine stop condition;
a detection section (70) that detects apparatus information related to the work apparatus (20);
**characterized in that** the work vehicle (1) further comprises:
a determination section (50) that determines whether or not a maintenance work state is kept, by using the apparatus information detected by the detection section (70), the maintenance work state being a state in which maintenance work is performed to ensure that an action is accomplished based on the predetermined work when the work apparatus (20) performs the predetermined work; and
an engine stop inhibition section (50) that inhibits the engine (41a) from being stopped by the engine stop section (50) even when the predetermined engine stop condition is established, in a case where maintenance of the work apparatus (20) is being performed .

2. The work vehicle (1) according to claim 1, wherein,
the work apparatus is a crane apparatus (20) that performs crane work for lifting a cargo and horizontally transporting the cargo, and
the maintenance is performed on the basis of a state of the crane apparatus.

3. The work vehicle (1) according to claim 2, wherein,
the crane apparatus (20) further includes:
an outrigger (12) that supports the work vehicle; and
a boom (22) that is provided so as to be able to rise and fall, and extends and contracts, the detection section detects a length of at least one of an outrigger overhang length while the outrigger supports the vehicle, and a boom length of the boom,
the maintenance work state is a state in which maintenance work is being performed for adjusting the at least one length detected by the detection section, and an actual overhang length of the outrigger (12) and/or an actual length of the boom (22) with respect to the length, the engine stop inhibition section (50) inhibits the engine (41a) from being stopped based on establishment of the engine stop condition, when the determination section determines that at least one of an overhang state of the outrigger (12) and a state of the boom (22) at a time of the predetermined work is being adjusted.

4. The work vehicle (1) according to claim 3, wherein,
the maintenance mode includes:
a service mode in which whether the crane apparatus (20) operates in a normal state or not is checked; and
an adjustment mode in which adjustment is made such that the apparatus information detected by the detection section (70) coincides with actually measured actual data.

5. The work vehicle (1) according to any one of claims 1 to 4, wherein, the predetermined engine stop condition includes a condition that driving operation of the work apparatus (20) is not performed for a fixed time or that predetermined operation by a worker is not performed for a fixed time.

6. The work vehicle (1) according to any one of claims 1 to 5, further comprising:
an input apparatus (51) that inputs information during the maintenance; and
a display apparatus (52) that displays a screen of the maintenance, wherein,
the input apparatus (51) and the display apparatus (52) operate using the engine (41a) as a motive power source.

## Patentansprüche

1. Ein Arbeitsfahrzeug (1) bestehend aus:
einer Arbeitsvorrichtung (20), die eine vorbestimmte Arbeit ausführt und einen Motor (41a) als Antriebskraftquelle verwendet;
einen Motorstoppabschnitt (50), der den Motor (41a) auf der Grundlage einer vorbestimmten Motorstoppbedingung stoppt;
einen Detektionsabschnitt (70), der Vorrichtungsinformationen in Bezug auf die Arbeitsvorrichtung (20) detektiert;
**dadurch gekennzeichnet, dass** das Arbeitsfahrzeug (1) ferner umfasst:
einen Bestimmungsabschnitt (50), der unter Verwendung der von dem Detektionsabschnitt (70) erfassten Vorrichtungsinformation bestimmt, ob ein Wartungsarbeitszustand beibehalten wird oder nicht, wobei der Wartungsarbeitszustand ein Zustand ist, in dem eine Wartungsarbeit ausgeführt wird, um sicherzustellen, dass eine Aktion auf der Grundlage der vorbestimmten Arbeit ausgeführt wird, wenn die Arbeitsvorrichtung (20) die vorbestimmte Arbeit ausführt; und
einen Motorstopp-Verhinderungsabschnitt (50), der verhindert, dass der Motor (41a) durch den Motorstoppabschnitt (50) gestoppt wird, selbst wenn der vorbestimmte Motorstopp-Zustand hergestellt ist, in einem Fall, in dem eine Wartung der Arbeitsvorrichtung (20) durchgeführt wird.

2. Das Arbeitsfahrzeug (1) nach Anspruch 1, wobei,
die Arbeitsvorrichtung eine Kranvorrichtung (20) ist, die Kranarbeit zum Heben einer Ladung und zum horizontalen Transport der Ladung ausführt, und
die Wartung auf der Grundlage eines Zustands der Kranvorrichtung durchgeführt wird.

3. Das Arbeitsfahrzeug (1) nach Anspruch 2, wobei,
die Kranvorrichtung (20) weiter umfasst:
einen Stützausleger (12), der das Arbeitsfahrzeug stützt; und
einen Kranausleger (22), der so vorgesehen ist, dass er steigen und fallen, sich ausdehnen und zusammenziehen kann,
der Detektionsabschnitt erkennt eine Länge von mindestens einer Länge eines Auslegerüberhangs, während der Stützausleger das Fahrzeug stützt, und eine Auslegerlänge des Kranauslegers,
der Wartungsarbeitszustand ein Zustand ist, in dem eine Wartungsarbeit zum Einstellen der mindestens einen Länge, die durch den Detektionsabschnitt detektiert wird, und einer tatsächlichen Überhanglänge des Stützauslegers (12) und/oder einer tatsächlichen Länge des Kranauslegers (22) in Bezug auf die Länge durchgeführt wird, wobei der Motorstopp-Verhinderungsabschnitt (50) verhindert, dass der Motor (41a) auf der Grundlage der Einrichtung des Motorstopp-Zustands gestoppt wird, wenn der Bestimmungsabschnitt bestimmt, dass mindestens einer von einem Überhangzustand des Stützauslegers (12) und einem Zustand des Kranauslegers (22) zu einem Zeitpunkt der vorbestimmten Arbeit eingestellt wird.

4. Das Arbeitsfahrzeug (1) nach Anspruch 3, wobei,
der Wartungsmodus umfasst:
einen Betriebsmodus, in dem geprüft wird, ob die Kranvorrichtung (20) in einem normalen Zustand arbeitet oder nicht; und
einen Einstellmodus, in dem die Einstellung so vorgenommen wird, dass die vom Detektionsabschnitt (70) erfassten Vorrichtungsinformationen mit den tatsächlich gemessenen tatsächlichen Daten übereinstimmen.

5. Das Arbeitsfahrzeug (1) nach einem der Ansprüche 1 bis 4, wobei der vorbestimmte Motorstopp-Zustand eine Bedingung einschließt, dass der Fahrbetrieb der Arbeitsvorrichtung (20) für eine festgelegte Zeit nicht ausgeführt wird, oder dass der vorbestimmte Betrieb durch einen Arbeiter für eine festgelegte Zeit nicht ausgeführt wird.

6. Das Arbeitsfahrzeug (1) nach einem der Ansprüche 1 bis 5, ferner umfassend:
eine Eingabevorrichtung (51), die während der Wartung Informationen eingibt; und
eine Bildschirmvorrichtung (52), die einen Wartungsbildschirm anzeigt, wobei
die Eingabevorrichtung (51) und die Bildschirmvorrichtung (52) unter Verwendung des Motors (41a) als Antriebskraftquelle arbeiten.

## Revendications

1. Véhicule de travail (1) comprenant :
un dispositif de travail (20) qui effectue un travail prédéterminé en utilisant un moteur (41a) comme source de force motrice;
une section d'arrêt du moteur (50) qui arrête le moteur (41a) sur la base d'une condition d'arrêt de moteur prédéterminée;
une section de détection (70) qui détecte des informations de dispositif relatives au dispositif de travail (20) ;
**caractérisé en ce que** le véhicule de travail (1) comprend en outre :
une section de détermination (50) qui détermine si un état de travail de maintenance est maintenu ou non en utilisant les informations de dispositif détectées par la section de détection (70), l'état de travail de maintenance étant un état dans lequel un travail de maintenance est effectué pour garantir qu'une action est réalisée sur la base du travail prédéterminé lorsque le dispositif de travail (20) effectue le travail prédéterminé; et
une section d'inhibition d'arrêt du moteur (50) qui empêche le moteur (41a) d'être arrêté par la section d'arrêt du moteur (50) même lorsque la condition d'arrêt de moteur prédéterminée est remplie, dans un cas où l'entretien du dispositif de travail (20) est effectué.

2. Véhicule de travail (1) selon la revendication 1, dans lequel
le dispositif de travail est un dispositif de grue (20) qui effectue un travail de grue pour soulever une charge et pour transporter la charge horizontalement, et
la maintenance est effectuée sur la base d'un état du dispositif de grue.

3. Véhicule de travail (1) selon la revendication 2, dans lequel
le dispositif de grue (20) comprend en outre :
un stabilisateur (12) qui soutient le véhicule de travail ; et
une flèche (22) qui est prévue de manière à pouvoir monter et descendre, et s'étend et se rétracte,
la section de détection détecte une longueur d'au moins une longueur de porte-à-faux du stabilisateur pendant que le stabilisateur soutient le véhicule, et une longueur de flèche de la flèche ;
l'état de travail de maintenance est une condition dans laquelle un travail de maintenance est effectué pour régler, par rapport à la longueur, la au moins une longueur détectée par la section de détection, et une longueur réelle de porte-à-faux du stabilisateur (12) et/ou une longueur réelle de la flèche (22), et la section d'inhibition d'arrêt du moteur (50) empêche l'arrêt du moteur (41a) sur la base de l'établissement de la condition d'arrêt du moteur lorsque la section de détermination détermine qu'au moins l'un d'un état de porte-à-faux du stabilisateur (12) et d'un état de la flèche (22) est réglé à un moment du travail prédéterminé.

4. Véhicule de travail (1) selon la revendication 3, dans lequel,
l'état de maintenance comprend :
un état de fonctionnement dans lequel est vérifié si le dispositif de grue (20) fonctionne dans un état normal ou non ; et
un état de réglage dans lequel un réglage est effectué de telle sorte que les informations de dispositif détectées par la section de détection (70) coïncident avec des données réelles effectivement mesurées.

5. Véhicule de travail (1) selon l'une quelconque des revendications 1 à 4, dans lequel la condition d'arrêt de moteur prédéterminée comprend une condition selon laquelle l'opération de conduite du dispositif de travail (20) n'est pas effectuée pendant une durée déterminée ou selon laquelle une opération prédéterminée par un travailleur n'est pas effectuée pendant une durée déterminée.

6. Véhicule de travail (1) selon l'une quelconque des revendications 1 à 5, comprenant en outre :
un dispositif d'entrée (51) qui entre les informations pendant la maintenance; et
un dispositif d'affichage (52) qui affiche un écran de la maintenance, dans lequel
le dispositif d'entrée (51) et le dispositif d'affichage (52) fonctionnent en utilisant le moteur (41a) comme source de force motrice.
